(19) Europäisches Patentamt
European Patent Office
Office européen des brevets

(11) **EP 2 447 688 A1**

(12) **DEMANDE DE BREVET EUROPEEN**

(43) Date de publication:
**02.05.2012 Bulletin 2012/18**

(51) Int Cl.:
*G01J 5/04* (2006.01)   *G01J 5/06* (2006.01)
*G01J 5/20* (2006.01)   *G01J 5/02* (2006.01)

(21) Numéro de dépôt: **11354055.3**

(22) Date de dépôt: **19.10.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.10.2010 FR 1004202**

(71) Demandeur: **Commissariat à l'Énergie Atomique et aux Énergies Alternatives 75015 Paris (FR)**

(72) Inventeurs:
• **Ouvrier-Buffet, Jean-Louis 74320 Sevrier (FR)**
• **Meilhan, Jérôme 38000 Grenoble (FR)**

(74) Mandataire: **Gris, Sébastien et al Cabinet Hecké Europole 10, rue d'Arménie - BP 1537 38025 Grenoble Cedex 1 (FR)**

(54)   **Dispositif de détection d'un rayonnement électromagnétique**

(57)   Dispositif de détection d'un rayonnement électromagnétique qui comporte un bolomètre actif (7) muni d'un premier élément sensible (12) audit rayonnement électromagnétique (8) et un bolomètre de référence (10) identique au bolomètre actif (7), muni d'un second élément sensible (13) audit rayonnement électromagnétique (8). Les bolomètres actif (7) et de référence (10) sont disposés sur un même substrat (14), à proximité l'un de l'autre. Un capot (15) recouvre au moins la partie du second élément sensible (13) exposée au rayonnement électromagnétique (8) et aménage un espace vide entre ledit second élément sensible (13) et le capot (15). La paroi interne (17) du capot (15) est constituée par une couche absorbante en un matériau, absorbant au moins les radiations thermiques émises par le second élément sensible (13). Un écran réfléchissant forme au moins une partie exposée audit rayonnement électromagnétique (8), de la paroi externe (16).

Figure 4

EP 2 447 688 A1

**Description**

**Domaine technique de l'invention**

L'invention concerne un dispositif de détection d'un rayonnement électromagnétique qui comporte :

- un bolomètre actif muni d'un premier élément sensible audit rayonnement électromagnétique,
- un bolomètre de référence identique au bolomètre actif, muni d'un second élément sensible audit rayonnement électromagnétique, lesdits bolomètres, actif et de référence, étant disposés sur un même substrat, à proximité l'un de l'autre,
- un capot ayant une paroi externe et une paroi interne orientée vers le second élément sensible, ledit capot recouvre au moins la partie du second élément sensible exposée au rayonnement électromagnétique et aménage un espace vide entre ledit second élément sensible et le capot et,
- un écran réfléchissant formant au moins une partie exposée audit rayonnement électromagnétique, de la paroi externe.

**État de la technique**

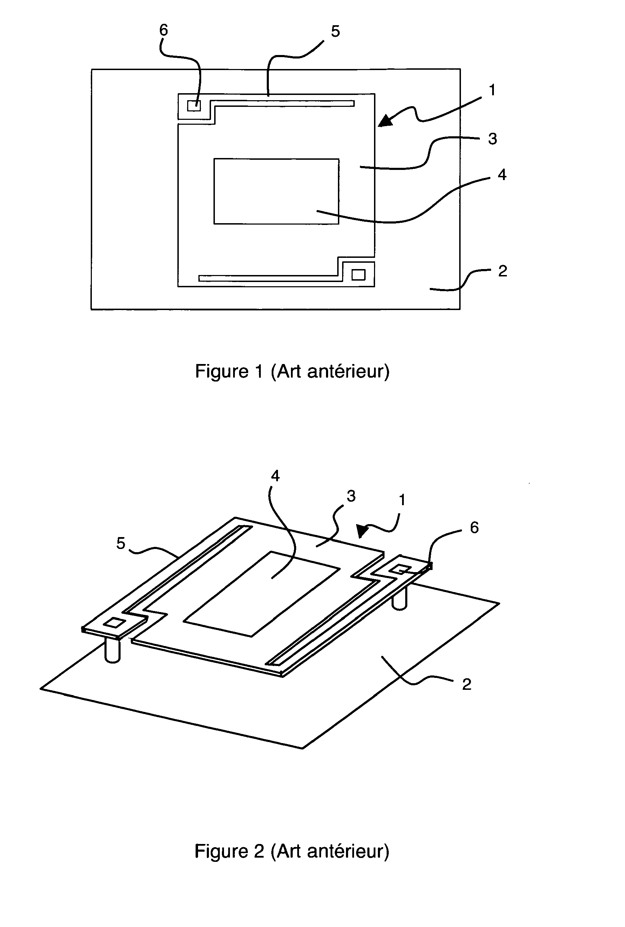

Les bolomètres permettent de mesurer la puissance d'un rayonnement électromagnétique dans le domaine du térahertz ou des rayons infrarouges par conversion du rayonnement en signal électrique. Comme illustré aux figures 1 et 2, un détecteur bolométrique de type résistif comporte une planche bolométrique 1 suspendue au-dessus d'un substrat 2. La planche bolométrique 1 est constituée par une membrane 3 absorbant le rayonnement électromagnétique et d'un thermistor 4 constitué d'un matériau semiconducteur thermosensible, dont la caractéristique essentielle est de présenter une variation de résistance électrique lorsque sa température varie. La membrane 3 est suspendue par l'intermédiaire de bras d'isolation thermique 5 fixés au substrat 2 par des points d'ancrage 6. La membrane 3 absorbe le rayonnement incident, le transforme en chaleur et transmet la chaleur à un thermistor 4. L'élévation de température du thermistor 4 induit alors une variation de tension ou de courant, aux bornes du détecteur bolométrique, mesurée par un montage électrique approprié. Des électrodes (non représentées) sont, par exemple, disposées au niveau des points d'ancrage 6. De façon conventionnelle, un circuit de lecture est intégré au substrat 2 et assure l'exploitation des mesures réalisées. Les bras d'isolation thermique 5 isolent thermiquement la membrane 3 vis-à-vis du substrat 2 et améliorent ainsi la sensibilité de la mesure.

Un fonctionnement performant du détecteur bolométrique nécessite trois conditions principales: une faible masse calorifique, une bonne isolation thermique de la membrane 3 vis-à-vis du substrat 2 et une bonne sensibilité de l'effet de conversion de l'échauffement en signal électrique. Les deux premières conditions sont obtenues grâce à une mise en oeuvre en couches minces du détecteur bolométrique.

Des imageurs infrarouges monolithiques fonctionnant à température ambiante sont fabriqués en connectant directement une matrice de détecteurs bolométriques à un circuit de multiplexage en silicium de type CMOS ou CCD.

Le principe de lecture d'un détecteur bolométrique consiste à mesurer la valeur de la résistance du thermistor 4 et ses variations. Lorsque ces variations sont très faibles, en particulier, pour la détection infrarouge (IR), le signal détecté est amplifié au sein du circuit de lecture à travers un étage amplificateur ou intégrateur à fort gain. D'une manière générale, l'étage intégrateur est privilégié car il réduit intrinsèquement la bande passante et élimine de ce fait le bruit blanc.

Dans le cas de l'intégrateur, le courant issu du détecteur bolométrique sature rapidement le signal de sortie d'un circuit intégré (en anglais "read out integrated circuit" noté ROIC). Le courant utile contenant l'information de la scène ne représente alors qu'une fraction du courant total intégré. Afin d'augmenter la sensibilité de la lecture, la fraction invariante du courant est classiquement dérivée dans une branche dite « d'ébasage » du circuit qui envoie uniquement la partie variable du courant, correspondant à la scène imagée, vers l'intégrateur.

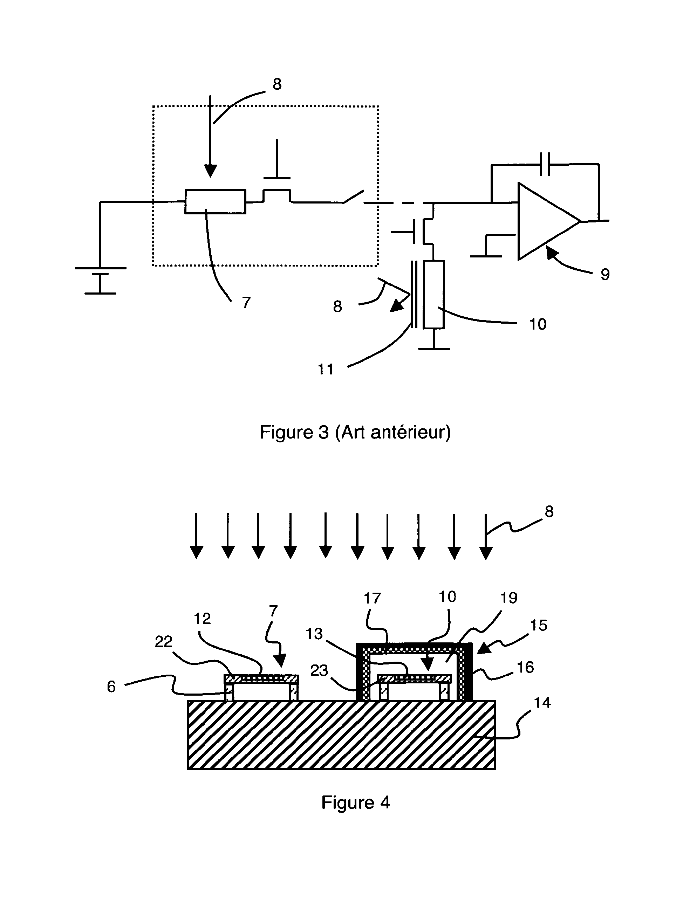

La figure 3 illustre le principe de lecture d'un dispositif de détection à bolomètre. Le dispositif comporte un bolomètre actif 7 qui absorbe un rayonnement électromagnétique 8 incident et permet la mesure de ce dernier. La variation de la résistance du bolomètre actif 7 est représentative de la valeur de ce rayonnement 8. Une lecture en courant est fréquemment utilisée pour faire cette mesure. Le courant, à la sortie du bolomètre actif 7, comporte une fraction variable et une fraction invariante. En effet, le dispositif de détection fonctionne en relatif, c'est-à-dire qu'il détecte un signal continu invariant de fond, qui peut gêner la mesure du signal variable utile, qui est, en général, petit devant ce signal de fond. Il est donc souhaitable d'éliminer cette fraction invariante du courant pour obtenir une mesure optimale de la valeur du rayonnement.

Afin d'augmenter la sensibilité de la lecture, la fraction invariante du courant est, de préférence, dérivée dans une branche de dérivation, pour n'envoyer que la partie variable du courant, appelée courant d'offset, vers un intégrateur 9. En termes d'électronique, l'élément qui sert à la branche de dérivation doit être peu bruyant pour engendrer le moins possible de perturbations. Pour cela, la branche de dérivation est réalisée par l'intermédiaire d'une résistance suffisamment élevée et polarisée en injection directe. Par injection directe, on entend que les électrons issus de la résistance sont directement injectés dans un transistor qui assure la polarisation de la résistance et le réglage de la polarisation du détecteur.

Une solution classique consiste à utiliser un bolomètre de référence 10 comme branche de dérivation, c'est-à-dire un bolomètre 10 qui ne détecte pas le rayonnement électromagnétique 8.

La branche de dérivation comporte donc, comme représenté figure 3, un bolomètre de référence 10, qui est rendu aveugle, par un écran de protection 11 placé entre le rayonnement électromagnétique 8 et le bolomètre de référence 10. Le bolomètre de référence 10 est ainsi transformé en bolomètre passif, qui n'absorbe aucun rayonnement et sert de référence.

L'efficacité de ce type de dispositif de détection dépend des caractéristiques du bolomètre de référence 10 et de sa capacité à se révéler totalement aveugle.

À titre d'exemple, le document US-A-2007138395 propose un détecteur thermique qui comporte une première cellule qui fournit un signal dépendant de l'intensité du rayonnement incident et une seconde cellule utilisée pour calibrer le signal de sortie de la première cellule. Chaque cellule contient un détecteur infrarouge formé sur un même substrat et possède un capot encapsulant entièrement le détecteur. La seconde cellule est configurée pour éviter la transmission du rayonnement à travers le capot et au détecteur. En particulier, le capot possède un écran réfléchissant. L'écran réfléchissant est disposé sur la surface supérieure du capot, la surface supérieure étant parallèle au substrat. Cet écran réfléchissant permet de rendre la seconde cellule optiquement opaque. Le signal de sortie de la seconde cellule est indépendant du rayonnement incident et est utilisé comme signal de référence pour calibrer le signal de sortie de la première cellule.

Néanmoins, l'utilisation d'un écran réfléchissant au-dessus de la structure de référence ne suffit pas pour supprimer de façon optimale le courant d'offset et pour détecter des signaux très faibles, par exemple, pour des dispositifs d'imagerie IR qui nécessitent l'emploi de forts gains de détection du signal de la scène d'imagerie IR. En effet, pour obtenir un gain important sur la réponse du détecteur, la résistance bolométrique est généralement polarisée de manière pulsée.

Or, pendant le pulse de polarisation, on observe un phénomène d'auto-échauffement du bolomètre provoqué par dissipation effet joule au sein du matériau constituant le thermistor 4. Le courant d'offset évolue alors de manière significative du fait de ce phénomène de radiation thermique.

Une architecture de soustraction de l'offset via un courant continu se révèle alors handicapante, dès lors qu'il s'agit de résoudre le signal de faibles flux de rayonnements électromagnétiques. Le phénomène d'auto-échauffement induit une saturation du ROIC qui limite le gain utilisable et ne permet pas d'accéder à une performance optimale du bolomètre.

**Objet de l'invention**

L'invention a pour but un dispositif de détection permettant une mesure fiable et précise d'un rayonnement électromagnétique et, notamment, un dispositif optimisé permettant d'amplifier au mieux un signal de scènes d'imagerie IR, avec des gains élevés et un ébasage du courant d'offset amélioré.

Selon l'invention, ce but est atteint un dispositif de détection d'un rayonnement électromagnétique selon les revendications indexées.

En particulier, ce but est atteint par le fait que la paroi interne du capot est constituée par une couche absorbante, ladite couche étant en un matériau absorbant au moins les radiations thermiques émises par le second élément sensible.

**Description sommaire des dessins**

D'autres avantages et caractéristiques ressortiront plus clairement de la description qui va suivre des modes particuliers de réalisation de l'invention donnés à titre d'exemples non limitatifs et représentés aux dessins annexés, dans lesquels :

- Les figures 1 et 2 représentent, schématiquement et respectivement en vue de dessus et en perspective, un détecteur bolométrique de l'art antérieur.
- La figure 3 représente, schématiquement, le principe de lecture d'un dispositif de détection à bolomètre d'un rayonnement électromagnétique selon l'art antérieur.
- La figure 4 représente, schématiquement et en coupe, un dispositif de détection d'un rayonnement électromagnétique selon l'invention.
- La figure 5 est une représentation schématique du principe d'échanges thermiques entre deux surfaces $S_1$ et $S_2$.
- La figure 6 représente, schématiquement et en coupe, un mode de réalisation particulier du dispositif selon l'invention.
- La figure 7 représente, schématiquement et en perspective, un dispositif de détection selon la figure 6.

- Les figures 8 à 13 représentent, schématiquement et en coupe, les différentes étapes d'un procédé de fabrication du dispositif de détection selon la figure 4.
- La figure 14 représente, schématiquement et en coupe, un dispositif de détection selon un mode de réalisation particulier de l'invention.
- La figure 15 représente, schématiquement et en coupe, un dispositif de détection selon un autre mode de réalisation particulier.
- Les figures 16 à 21 représentent, schématiquement et en coupe, les différentes étapes d'un procédé de fabrication du dispositif de détection selon la figure 15.
- La figure 22 représente la variation du courant en fonction du temps, d'un dispositif de détection selon l'invention et d'un dispositif de l'art antérieur.

**Description des modes de réalisation particuliers de l'invention**

Comme représenté à la figure 4, un dispositif de détection d'un rayonnement électromagnétique 8 comporte un bolomètre actif 7 muni d'un premier élément sensible 12 audit rayonnement électromagnétique 8 et un bolomètre de référence 10 identique au bolomètre actif 7 et muni d'un second élément sensible 13 audit rayonnement électromagnétique 8. Par identique, on entend strictement identique c'est-à-dire que le bolomètre de référence 10 est constitué par des matériaux identiques à ceux du bolomètre actif 7 et possède une même architecture ainsi que des dimensions identiques. Ainsi, le bolomètre de référence 10 évolue avec la température de manière identique.

Le bolomètre actif et le bolomètre de référence, respectivement 7 et 10, sont disposés sur un même substrat 14 et à proximité l'un de l'autre.

Le substrat 14 est un support classiquement réalisé en silicium. Il assure la rigidité mécanique du bolomètre actif et du bolomètre de référence, respectivement 7 et 10, et comporte, de préférence, des dispositifs de polarisation et de lecture de la résistance du thermistor (non représentés). Il peut également comporter des composants de multiplexage permettant, notamment dans le cas d'un dispositif de détection IR comportant plusieurs microbolomètres avec une structure matricielle, de sérialiser les signaux issus des différents microbolomètres et de les transmettre vers un nombre réduit de sorties, afin d'être exploités par un système d'imagerie usuel.

Comme représenté à la figure 4, le bolomètre actif 7 et le bolomètre de référence 10, ont avantageusement une structure isolante à microponts, chaque structure comportant de points d'ancrage 6 et de bras d'isolation thermique 5 (figure 2) afin de minimiser la conduction de la chaleur. La structure à microponts a une forte résistance thermique. Une forte résistance thermique permet de maximiser la variation de la résistance électrique. La masse thermique est ajustée pour être compatible avec la constante de temps thermique souhaité au niveau du système. Cette structure diminue ainsi le temps de réponse des signaux émis par le dispositif de détection et améliore le rapport signal/bruit.

Le dispositif de détection comporte également un capot 15 qui recouvre au moins la partie du second élément sensible 13 exposée au rayonnement électromagnétique 8 et aménage un espace vide entre le second élément sensible 13 et le capot 15. Le capot 15 peut être disposé uniquement au-dessus (en haut à la figure 4) du second élément sensible 13, sans recouvrir entièrement le bolomètre de référence 10. Le capot 15 aménage alors une cavité 19 ouverte. Le capot 15 est disposé sur le chemin optique du rayonnement électromagnétique 8, entre la source du rayonnement et le second élément sensible 13. On parlera alors d'un bolomètre de référence 10 écranté c'est-à-dire munit d'un capot 15 formant écran.

Le capot 15 a une paroi externe 16 et une paroi interne 17. La paroi interne 17 est orientée vers le second élément sensible 13 et la paroi externe 16 vers la scène émettant le rayonnement électromagnétique 8.

Pour obtenir un fonctionnement optimum, le bolomètre actif 7 et le bolomètre de référence 10 doivent, avantageusement, être identiques ou, au moins, comparables en termes de résistance électrique et de constante de temps thermique. On entend par constante de temps thermique le temps que met le bolomètre pour passer d'une température à une autre sous l'effet d'une variation de rayonnement électromagnétique incident 8.

La constante de temps thermique est le produit de la masse thermique par la résistance thermique du bolomètre. On entend par masse thermique, la capacité d'un matériau à emmagasiner de l'énergie thermique pour ensuite l'émettre par radiation (pertes radiatives), convection ou conduction.

La masse thermique et la résistance électrique sont des caractéristiques intrinsèques du bolomètre qui dépendent de la nature des matériaux constituant le bolomètre et de son architecture. Les bolomètres actif et de référence, respectivement 7 et 10, étant identiques, la masse thermique et la résistance électrique du bolomètre actif 7 sont, par conséquent, identiques à celles du bolomètre de référence 10.

En revanche, la résistance thermique dépend des pertes radiatives qui quantifient les échanges thermiques entre le bolomètre et son environnement.

Plus particulièrement, la résistance thermique comporte deux composantes, une première composante résultant des échanges thermiques entre la planche bolométrique 1 et le point d'ancrage 6, par conduction à travers les bras d'isolation thermique 5, et une seconde composante dépendant des pertes radiatives qui quantifient les échanges thermiques du bolomètre avec son environnement.

L'environnement du bolomètre déterminant l'amplitude des échanges thermiques radiatifs, influence par conséquent la valeur de la constante de temps thermique.

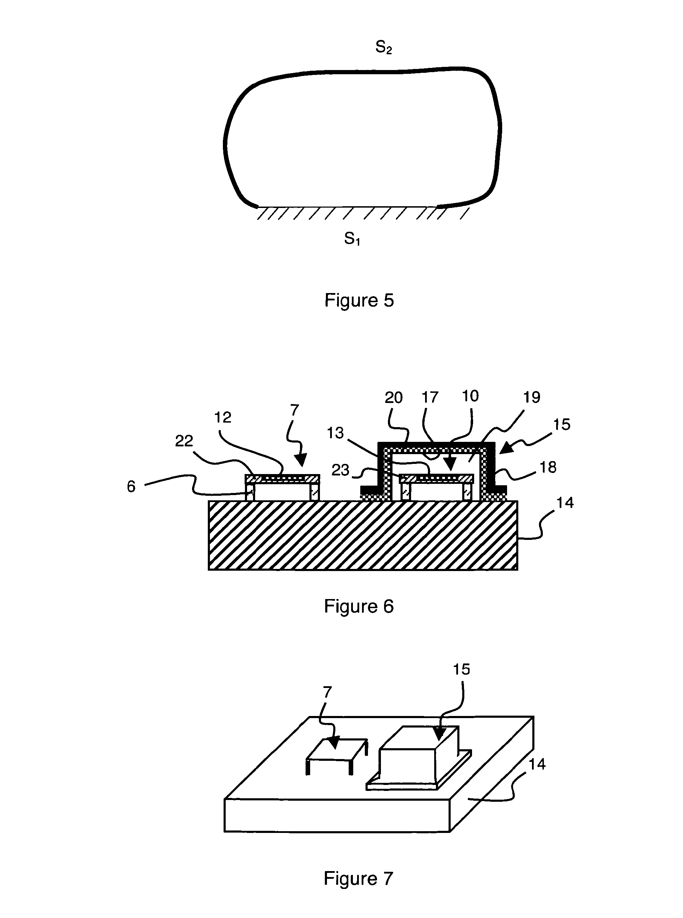

En effet, chaque surface émet, par principe, des radiations thermiques dans toutes les directions de l'espace et reçoit des radiations qui proviennent des autres surfaces qui l'entourent. Comme illustré à la figure 5, dans le cadre de flux thermiques échangés par deux surfaces $S_1$ et $S_2$, les échanges thermiques s'expriment par l'équation (1) suivante :

$$\frac{\Phi_{12}}{S_1} = \frac{\varepsilon_1 \varepsilon_2}{1 - \left(1 - \varepsilon_1 \dfrac{S_1}{S_2}\right)(1 - \varepsilon_2) + \varepsilon_1 \varepsilon_2 \dfrac{F_{11}}{F_{12}}} (\sigma(T_1^4 - T_2^4)) \qquad (1)$$

Dans laquelle :

$\varepsilon_1$, et $\varepsilon_2$ sont l'émissivité respective des surfaces $S_1$ et $S_2$,
$\phi_{12}$ la densité de flux rediatif échangée entre la surface $S_1$ et la surface $S_2$,
$T_1$ et $T_2$ les températures respectives de deux surfaces $S_1$ et $S_2$ et,
$F_{11}$ et $F_{12}$ les facteurs de forme sous lequel $S_1$ se voit et voit $S_2$.

Pour une surface $S_1$ plane telle que représentée à la figure 5, le facteur $F_{11}$ est égal à 0.

Un bolomètre conventionnel recouvert uniquement par un boîtier peut être schématisé, respectivement, par les surfaces $S_1$ (plan) et $S_2$ (figure 5). Les dimensions du boîtier étant grandes, d'une part, devant la distance du bolomètre au boîtier et, d'autre part, devant celles du bolomètre, l'équation (1) du flux de chaleur quittant le bolomètre $S_1$ vers le boîtier $S_2$ se simplifie pour donner l'équation (2) suivante :

$$\frac{\Phi_{12}}{S_1} = \varepsilon_1 (\sigma(T_1^4 - T_2^4)) \qquad (2)$$

Avec $S_1 / S_2 \ll 1$ et $F_{12} \cong 1$.

Le boîtier disposé à distance du bolomètre se comporte donc comme une surface noire.

En revanche, dans le cas d'un bolomètre de référence 10 présent à proximité du boîtier, le rapport $S_1/S_2$ étant compris entre environ 1 et 2, n'est plus négligeable. En reportant la valeur $F_{12}$ proche de 1 et le rapport $S_1/S_2$ dans l'équation (1), on constate que la présence du boîtier modifie notablement la densité de flux de chaleur.

La présence d'un capot 15 à proximité du bolomètre de référence 10 et, en particulier du second élément sensible 13, peut modifier la résistance thermique du bolomètre de référence 10. Par ailleurs, l'influence du capot 15 sur la résistance thermique dépend de la distance qui sépare ce capot 15 du bolomètre de référence 10. Ainsi, le bolomètre actif 7 voit un environnement différent de celui du bolomètre de référence 10. La présence du capot 15 explique une différence de résistance thermique observée entre le bolomètre actif 7 et le bolomètre de référence 10, en dépit du fait que les bolomètres 7 et 10 soient identiques.

Selon ce principe, dès lors que l'architecture du bolomètre de référence 10 demeure identique à celle du bolomètre actif 7, la seule possibilité pour que le flux de chaleur échangé par le bolomètre de référence 10 soit identique ou, tout au moins, comparable à celui échangé par le bolomètre actif 7 est de choisir un capot 15 constitué par un matériau se comportant comme un corps noir c'est-à-dire ayant une émissivité égale à 1 *($\varepsilon_2$ = 1)* et porté à la même température que le plan focal et le boîtier.

La paroi externe 16 du capot 15 exposé au rayonnement électromagnétique 8 doit, également, être réfléchissante et constituée par un matériau très bon conducteur thermique.

Le capot 15 doit, d'une part, absorber parfaitement les radiations thermiques sur la paroi interne 17 en regard du bolomètre de référence 10 et, d'autre part, être parfaitement réfléchissant sur la paroi externe 16 du capot 15, en regard de la scène émettant le rayonnement électromagnétique 8.

Pour ce faire, un écran réfléchissant 18 forme au moins une partie exposée au rayonnement électromagnétique 8, de la paroi externe 16. L'écran réfléchissant 18 est, classiquement, constitué par une couche mince réfléchissante formée par au moins un matériau ayant de bonnes propriétés réfléchissantes et bon conducteur thermique.

La totalité de la paroi externe 16 du capot 15 est, avantageusement, constituée par l'écran réfléchissant 18 (figure 4).

De façon alternative, l'écran réfléchissant 18 forme uniquement la partie de la paroi externe 16 exposée au rayonnement électromagnétique 8. Plus précisément, l'écran réfléchissant 18 forme uniquement la partie de la paroi externe 16 parallèle au substrat.

L'écran réfléchissant 18 évite la transmission du rayonnement électromagnétique 8 à travers le capot 15 jusqu'au bolomètre de référence 10. Le bolomètre de référence 10 est insensible au rayonnement électromagnétique 8.

L'écran réfléchissant 18 est, avantageusement, formé par au moins un matériau métallique choisi parmi l'aluminium, le titane, l'or, le nickel et les alliages de cuivre et d'aluminium.

Le dispositif de détection est, de préférence, un dispositif de détection des IR et des Térahertz (THz).

Le capot 15 prend appui sur le substrat 14 et forme avec le substrat 14 une cavité 19 ouverte ou fermée dans laquelle le bolomètre de référence 10 est logé.

Selon un mode de réalisation particulier, le capot 15 encapsule entièrement le second élément sensible 13.

Comme représenté aux figures 6 et 7, le capot 15 peut encapsuler entièrement le bolomètre de référence 10 situé dans la cavité 19. La cavité 19 alors fermée est délimitée par le capot 15 en partie haute (en haut à la figure 6) et par le substrat 14 en partie basse (en bas à la figure 6).

Le capot 15 recouvre, de préférence, entièrement le bolomètre de référence 10, sans être en contact avec celui-ci. Le capot 15 forme ainsi une capsule qui aménage une cavité 19 fermée, éventuellement, hermétique dans laquelle est disposé le bolomètre de référence 10 (figures 6 et 7).

Le capot 15 peut, également, former une bordure formant appui sur le substrat 14 qui s'étend sur une partie du substrat 14. Comme illustré à la figure 7, la bordure est présente tout autour de la capsule améliorant l'adhérence et, éventuellement, l'étanchéité du capot 15.

La paroi interne 17 du capot 15 est constituée par une couche absorbante 20 de sorte que la cavité 19 fermée constitue une cavité absorbante. Plus précisément, la totalité de la paroi interne 17 est constituée par la couche absorbante 20 pour absorber les radiations provenant du second élément sensible 13. Le matériau absorbant constituant la couche absorbante 20 recouvre la totalité de la paroi interne 17 du capot 15. La couche absorbante 20 est en un matériau absorbant au moins les radiations thermiques émises par le second élément sensible 13, de préférence, par l'ensemble du bolomètre de référence 10. En effet, lors du fonctionnement du dispositif de détection, le second élément sensible 13 s'échauffe et émet des radiations qui sont alors absorbées par la couche absorbante 20.

La couche absorbante 20 est, avantageusement, formée par au moins un matériau absorbant métallique poreux choisi parmi l'or noir, le platine, l'argent et le chrome. L'or noir et le platine sont couramment utilisés dans le domaine des dispositifs de détection pyroélectriques ou thermopiles et l'argent et le chrome pour élaborer les absorbeurs noirs.

La thermalisation du bolomètre c'est-à-dire la température que va prendre le bolomètre de référence 10 est une conséquence des pertes par conduction thermique via les bras d'isolation thermique 5 auxquelles s'ajoutent les pertes par rayonnement qui sont gouvernées par la paroi interne 17 constitué par un corps noir.

Selon une variante, la couche absorbante 20 est formée par au moins un matériau polymère contenant du graphite. Les matériaux polymères contenant du graphite peuvent absorber jusqu'à 80% entre $2\mu m$ et $20\mu m$. Le terme polymère couvre, également, les résines polymères de type époxy, polyimide et les résines photosensibles.

Pour améliorer la capacité d'absorption de la couche absorbante 20, cette dernière peut également être réalisée sous forme d'une multicouche et/ou comporter plusieurs matériaux absorbants de nature différente.

Le bolomètre de référence 10 ayant le capot 15 décrit ci-dessus présente alors une résistance thermique identique ou, au moins, comparable à celle du bolomètre actif 7.

Le dispositif de détection d'un rayonnement électromagnétique décrit ci-dessus peut être fabriqué sous forme élémentaire ou sur tranche de manière collective dans le cadre d'un procédé d'encapsulation sous vide des dispositifs de détection.

Selon les modes de réalisation particuliers représentés aux figures 4 et 6, le dispositif de détection comporte un bolomètre actif 7 non-écranté et un bolomètre de référence 10 écranté par le capot 15.

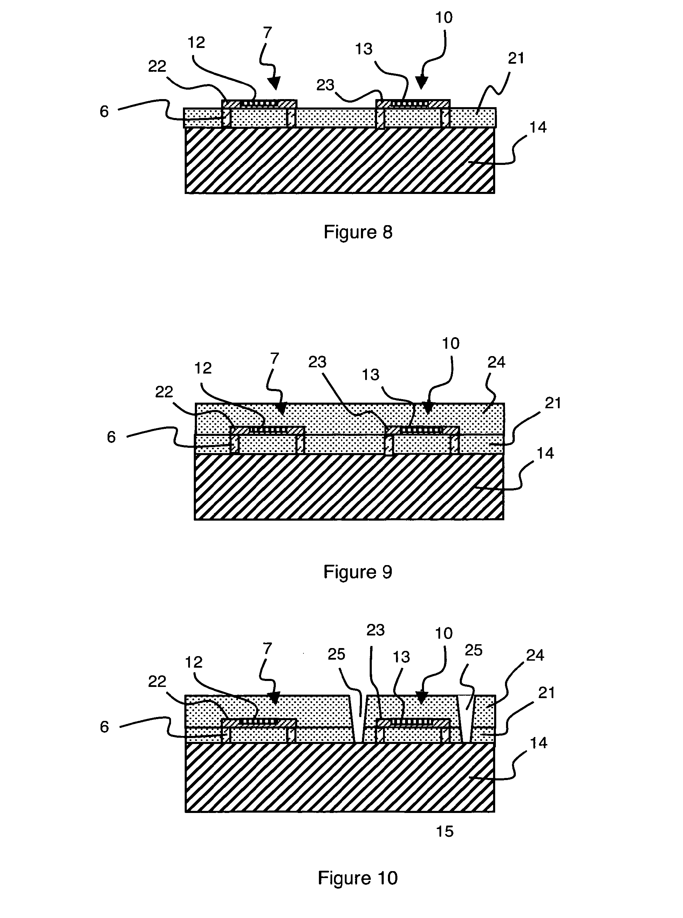

Un mode particulier de réalisation d'un tel dispositif de détection d'un rayonnement électromagnétique 8 va être décrit plus en détail au regard des figures 8 à 13.

Les caractéristiques du bolomètre actif 7 et du bolomètre de référence 10 peuvent légèrement changées selon les conditions de leur fabrication, notamment pour les dispositifs de détection IR miniaturisés. Ces différences de caractéristique engendrent alors des erreurs de mesure notamment dans le cas de mesures précises de changement de température d'un thermistor 4 (figure 2). Pour améliorer la précision des mesures et éviter notamment ce type d'erreurs, le bolomètre actif 7 et le bolomètre de référence 10 sont, de préférence, formés simultanément sur un même substrat 14.

Comme représenté à la figure 8, le procédé de fabrication du dispositif de détection comporte d'abord le dépôt, sur le substrat 14 comportant les points d'ancrage 6, d'une première couche sacrificielle 21, de préférence en polyimide, d'épaisseur approximativement égale à l'épaisseur des points d'ancrage 6 des bolomètres actif et de référence, 7 et 10. Des planches bolométriques 22 et 23 comportant, respectivement, le premier élément sensible 12 et le second élément sensible 13 sont alors réalisées, de manière classique, pour former les bolomètres actif et de référence, respectivement 7 et 10.

Comme représenté à la figure 9, une seconde couche sacrificielle 24, de préférence, en polyimide est ensuite déposée sur la première couche sacrificielle 21 et sur les planches bolométriques 22 et 23. Les traitements thermiques introduits par ce dépôt ne doivent pas altérer les performances des bolomètres actif et de référence, 7 et 10. L'épaisseur de la seconde couche sacrificielle 24 est comprise entre $0,5\mu m$ et $5\mu m$ afin de former l'espace vide au-dessus du second élément sensible 13 et réaliser le capot 15 à une distance au-dessus du bolomètre de référence 10, également, comprise entre $0,5\mu m$ et $5\mu m$ .

Sur la figure 10, une gravure des première et seconde couches sacrificielles, respectivement 21 et 24, est ensuite réalisée en regard du bolomètre de référence 10. Un évidement 25 est gravé conformément à la forme souhaitée du capot 15, tout autour du bolomètre de référence 10. L'évidemment 25 forme ainsi une tranchée continue qui entoure le bolomètre de référence 10 et qui traverse toute l'épaisseur des première et seconde couches sacrificielles, respectivement 21 et 24.

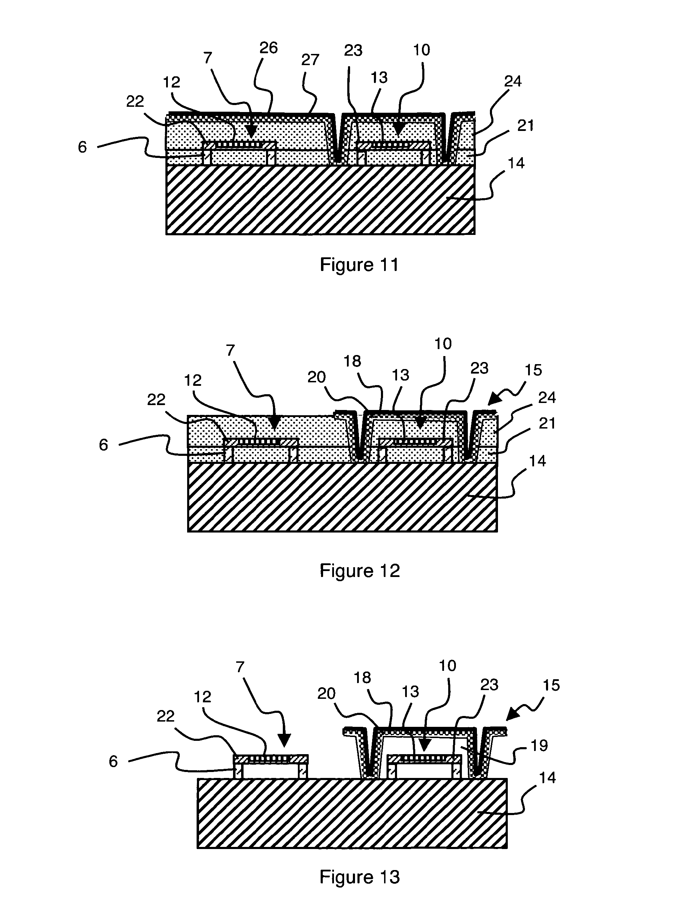

Comme représenté à la figure 11, différentes couches constitutives du capot 15 sont ensuite déposées, successivement, sur la seconde couche sacrificielle 24 sous forme de couches minces, selon tout procédé connu. On entend par couche mince, des couches ayant une épaisseur comprise entre $0.005\mu m$ et $1\mu m$.

Les couches sont constituées, par exemple, par une première couche 26 métallique déposée sur une seconde couche 27 en matériau absorbant. Dans tous les cas, les première et seconde couches, respectivement 26 et 27, sont choisies de manière à ce que le capot 15 présente les propriétés optiques et thermiques nécessaires pour réaliser la réflexion du rayonnement électromagnétique 8 ainsi que l'absorption des radiations thermiques émises par le bolomètre de référence 10 résultant de la puissance dissipée par effet joule lors de son fonctionnement.

Le dépôt des couches minces sont réalisées par pulvérisation cathodique, par décomposition thermique ("Low-pressure chemical vapor deposition" noté LPCVD) ou par dépôt plasma ("Plasma-enhanced chemical vapor deposition" noté PECVD).

À titre d'exemple, une seconde couche 27 en or noir peut être réalisée par évaporation d'or noir sous pression réduite d'azote comprise entre 2 mbar et 20 mbar.

Une seconde couche 27 en platine peut être déposée à partir de techniques classiques électrochimiques.

Le dépôt d'une seconde couche 27 en chrome peut être effectué, par exemple, par pulvérisation en présence d'un mélange argon (Ar)/oxygène ($O_2$) dans les conditions suivantes :

Pression comprise entre 1 mTorr et 20mTorr,
Rapport Ar/$O_2$ compris entre 20 :1 et 10 :1 et,
Puissance par unité de surface comprise entre $0.12W/cm^2$ et $2W/cm^2$.

De même, le dépôt d'une seconde couche 27 en argent peut être effectué par évaporation en présence d'argon ou d'azote, sous une pression comprise entre 75 mTorr et 750 mTorr.

Comme représenté aux figures 4 et 13, les première et seconde couches, 26 et 27, formées dans l'évidement 25, constituent ainsi les parois latérales du capot 15 reposant sur le substrat 14. Les parois latérales du capot 15 ont, avantageusement, une épaisseur comprise entre $0,1 \mu m$ et $2,5\mu m$.

Comme représenté à la figure 12, une gravure des couches 26 et 27 est ensuite effectuée en regard de l'emplacement du bolomètre actif 7 afin de former le capot 15 qui se retrouve uniquement en regard de l'emplacement du bolomètre de référence 10. Le capot 15 est, par exemple, délimité par des procédés de gravure chimique, plasma, ou par un procédé de type "lift off".

Enfin, les première et seconde couches sacrificielles, respectivement 21 et 24, sont ensuite gravées pour obtenir le dispositif de détection ayant un bolomètre actif 7 et un bolomètre de référence 10 sur le même substrat 14 ainsi qu'un capot 15 intégré se comportant comme un corps noir (figure 13).

La gravure des couches sacrificielles 21 et 24 est, de préférence, réalisée en une seule fois par tout procédé connu. Afin de faciliter cette dernière étape, il est possible de prévoir des orifices (non représentés) dans l'épaisseur du capot 15. La taille des orifices doit être suffisamment petite pour ne pas perturber les fonctions du capot 15. La gravure des couches sacrificielles 21 et 24 libère la cavité fermée 19.

Selon une variante non représentée, le dispositif de détection comporte un unique bolomètre de référence 10 pour plusieurs bolomètres actifs 7 identiques.

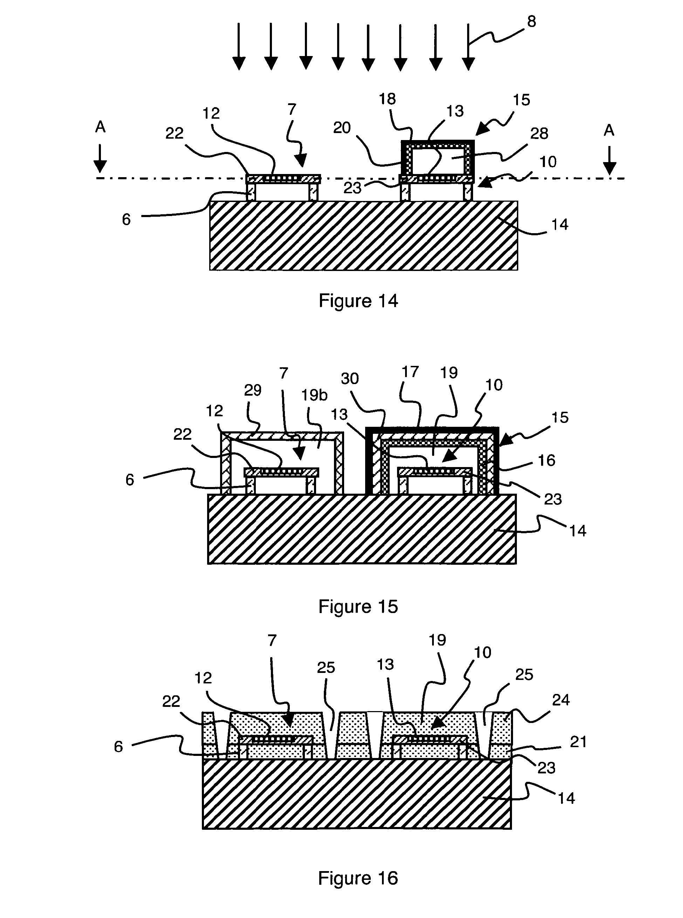

Selon une variante représentée à la figure 14, lorsque le bolomètre de référence 10 a une structure isolante à microponts comportant des points d'ancrage 6, le capot 15 peut prendre appui non pas sur le substrat 14 mais sur les points d'ancrage 6 du bolomètre de référence 10. Comme illustré à la figure 14, le capot 15 prend appui sur au moins deux des points d'ancrage 6 du bolomètre de référence 10. Le capot 15 et la planche bolométrique 23 du bolomètre de référence 10 forment une cavité 28 ouverte. La cavité 28 ouverte est délimitée par le capot 15 en partie haute (en haut à la figure 14) et par un plan AA en partie basse (en bas à la figure 14). Le plan AA passe par les points d'ancrage 6 formant appui. Lorsque les points d'ancrage 6 sont sur le même plan que la planche bolométrique 23, le plan AA passe également par la planche bolométrique 23 (figure 14). Le capot 15 ne recouvre pas le bolomètre de référence 10 mais uniquement le second élément sensible 13 sans être en contact avec celui-ci.

Le procédé de réalisation d'un tel dispositif diffère du mode de réalisation précédent en ce que l'évidemment 25 est réalisé par gravure en regard des points d'ancrage 6 du bolomètre de référence 10. Les première et seconde couches, 26 et 27, déposées dans les évidements 25 constituent après gravure les parois latérales du capot 15 reposant, sur les points d'ancrage 6 du bolomètre de référence 10.

Cette variante diminue, notablement, l'encombrement et réduit le volume nécessaire à la réalisation du capot 15. Cette variante est préférée lorsque la gravure des première et seconde couches sacrificielles 21 et 24 est particulièrement difficile.

Selon un autre mode de réalisation particulier représenté à la figure 15, le dispositif de détection se distingue des modes de réalisation précédents par le fait que le bolomètre actif 7 est encapsulé par une capsule 29 et que le capot 15 du bolomètre de référence 10 a une structure absorbante multicouche de type Fabry-Perrot. Le capot 15 comporte, en particulier, une couche support 30 constituée par un matériau transparent au rayonnement électromagnétique émis par le bolomètre de référence 10 et disposée entre la couche absorbante 20 et l'écran réfléchissant 18.

La couche support 30, la paroi externe 16 et la paroi interne 17 forment une cavité résonnante. La cavité résonnante absorbe le rayonnement électromagnétique éventuellement émis par le bolomètre de référence 10. La couche support 30 est constituée d'un matériau transparent au rayonnement électromagnétique émis par le bolomètre de référence 10.

La capsule 29 encapsule le bolomètre actif 7 et est constituée par un matériau transparent au rayonnement électromagnétique 8, avantageusement, identique au matériau transparent de la couche support 30.

Comme représenté à la figure 15, la couche support 30 forme une enveloppe ayant, de préférence, une forme identique à celle de la capsule 29.

La capsule 29 enveloppe entièrement le bolomètre actif 7 de manière à former une cavité 19b fermée dans laquelle le bolomètre actif 7 est logé. La cavité 19b fermée est délimitée, en partie haute, par la capsule 29 (en haut à la figure 15) et par le substrat 14, en partie basse (en bas à la figure 15).

La capsule 29 est transparente au rayonnement électromagnétique incident.

La couche absorbante 20 est formée par au moins un matériau absorbant résistif ayant une résistance carré adaptée, de préférence, choisi parmi le nitrure de titane et le nichrome. La couche absorbante 20 forme une cavité absorbante au niveau du capot 15. Le matériau absorbant résistif est placé en regard du bolomètre de référence 10 et a, avantageusement, une impédance comprise entre 376 et 377 Ω.carré, de préférence égale à 376,8 Ω.carré.

Le matériau transparent de la capsule 29 et/ou de la couche support 30 est choisi parmi le silicium monocristallin, polycristallin ou amorphe, le germanium monocristallin ou polycristallin et les alliages SiGe.

L'épaisseur d de la couche support 30 dépend de la longueur d'onde $\lambda$ du rayonnement électromagnétique émis par le bolomètre de référence 10 et de l'indice optique n de la couche support 30 suivant l'équation (3) suivante :

$$d = \lambda/4n \qquad (3)$$

La couche support 30 supporte l'écran réfléchissant 18, avantageusement métallique. À titre d'exemple, pour réaliser un capot 15 présentant un maximum d'absorption à 14$\mu$m, l'épaisseur d'une couche support 30 en silicium amorphe, insérée entre une couche absorbante 20 constitué par un matériau absorbeur résistif et un écran réfléchissant 18, par exemple en aluminium ou en un alliage à base d'aluminium, doit être de 1$\mu$m. Une telle structure présente alors une émissivité de 0.8 autour 300K, proche de celle d'un corps noir (égale à 1).

Cette structure est particulièrement adaptée à la technologie de microencapsulation sous vide, les matériaux constituant le capot 15 étant couramment employés dans ce domaine. Le dispositif de détection d'un rayonnement électromagnétique décrit ci-dessus peut être fabriqué dans le cadre d'un procédé d'encapsulation sous vide.

Un mode particulier de réalisation d'un dispositif de détection d'un rayonnement électromagnétique comportant un bolomètre actif 7 et un bolomètre de référence 10, selon la figure 15, va être décrit plus en détail au regard des figures 16 à 21.

Comme représenté à la figure 16, le procédé de réalisation d'un tel dispositif de détection diffère principalement du mode de réalisation précédent en ce que l'évidemment 25 est réalisé de façon à former une tranchée continue entourant le bolomètre de référence 10 et également une tranchée entourant le bolomètre actif 7.

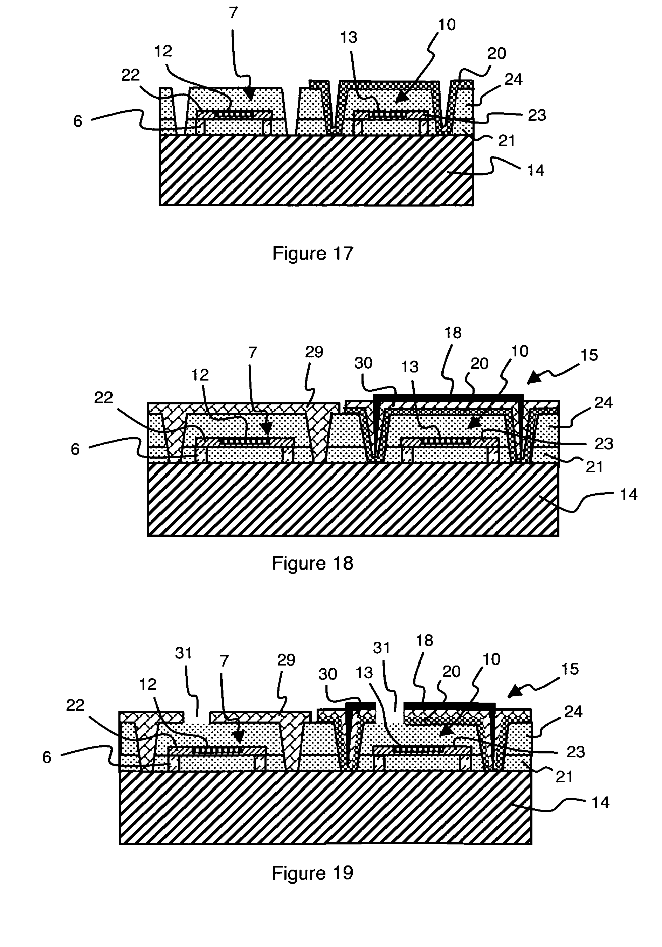

La seconde couche 27 en matériau absorbant est ensuite déposée puis gravée, selon tout procédé connu, en regard de l'emplacement du bolomètre actif 7, pour former la couche absorbante 20 du capot 15 (figure 17).

Une troisième couche (non représenté) en matériau transparent est ensuite déposée de façon à recouvrir l'évidement 25 et la couche absorbante 20 puis gravée selon tout procédé connu, pour former la couche support 30.

La première couche 26 est ensuite déposée puis gravée de façon à constituer l'écran réfléchissant 18 (figure 18).

Des orifices 31 sont pratiqués, successivement ou simultanément, dans la capsule 29 et le capot 15 à travers l'écran réfléchissant 18, la couche support 30 et la couche absorbante 20 afin de pouvoir former par la suite un canal de libération et de pompage 32 pour l'encapsulation des bolomètres actif et de référence, respectivement 7 et 10 (figure 19).

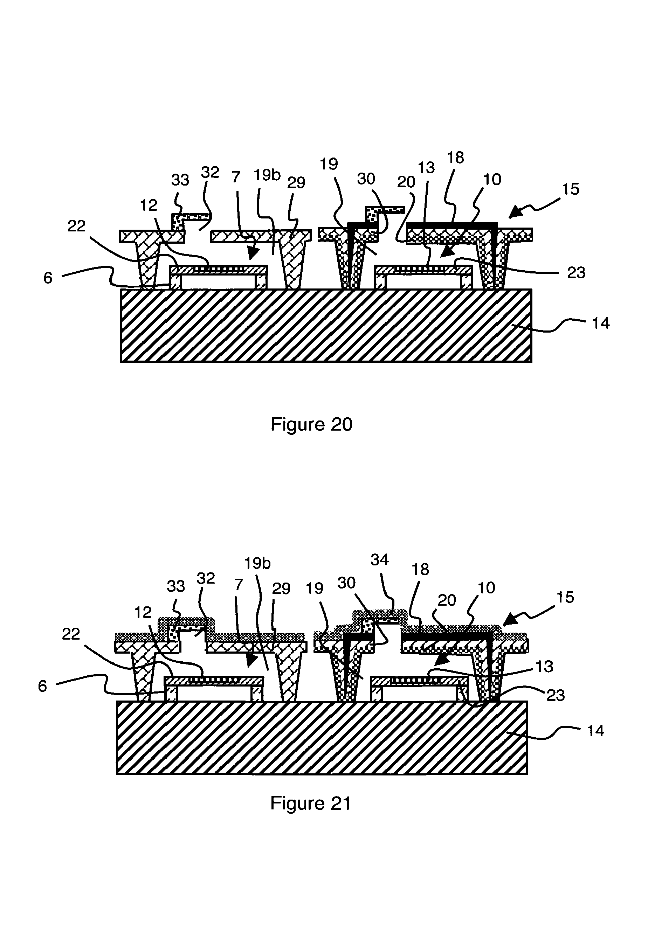

Les étapes représentées aux figures 20 et 21, consistent à réaliser selon un procédé classique, un canal de l'évent 33 (figure 20) puis à encapsuler sous vide les bolomètres actif et de référence, respectivement, 7 et 10, par dépôt d'une ou de plusieurs couches de scellement 34 (figure 21). Les couches de scellement permettent de boucher l'évent 33 et de faire une fonction anti-reflet pour le bolomètre actif 7.

Enfin, les première et seconde couches sacrificielles, respectivement 21 et 24, sont ensuite gravées, selon tout procédé connu, libérant ainsi les cavités 19 et 19b respectivement du capot 15 et de la capsule 29.

Éventuellement, un getter (non représenté) peut être incorporé dans les cavités 19 et 19b respectivement du capot 15 et de la capsule 29. Dans ce cas, le getter doit être activé, classiquement par traitement thermique, avant le scellement des bolomètres 7 et 10.

Le dispositif de détection d'un rayonnement électromagnétique de l'invention permet d'éliminer la composante d'auto-échauffement du signal délivré par le bolomètre actif, noté $S_a$, et d'amplifier au mieux le signal de la scène émettant le rayonnement électromagnétique 8. Le bolomètre de référence 10 est identique du point de vue électro-thermique au bolomètre actif 7 et aveugle vis-à-vis du rayonnement électromagnétique 8, en particulier pour les IR.

Ce dispositif de détection est prometteur car il permet de reproduire à l'identique le comportement thermique du bolomètre actif 7 pendant le pulse de polarisation, le signal du bolomètre de référence 10, noté $S_r$, comportant les mêmes composantes de signal d'offset et d'auto-échauffement. L'environnement radiatif du bolomètre de référence 10 émule celui du bolomètre actif 7 de façon optimisée, permettant ainsi de soustraire au mieux le courant d'offset. Ainsi, une fois avoir soustrait les signaux de ces bolomètres, 7 et 10, le signal résultant noté $S_u$ correspond uniquement à la contribution de la scène et pourra ensuite être amplifié par le reste de la chaîne de lecture.

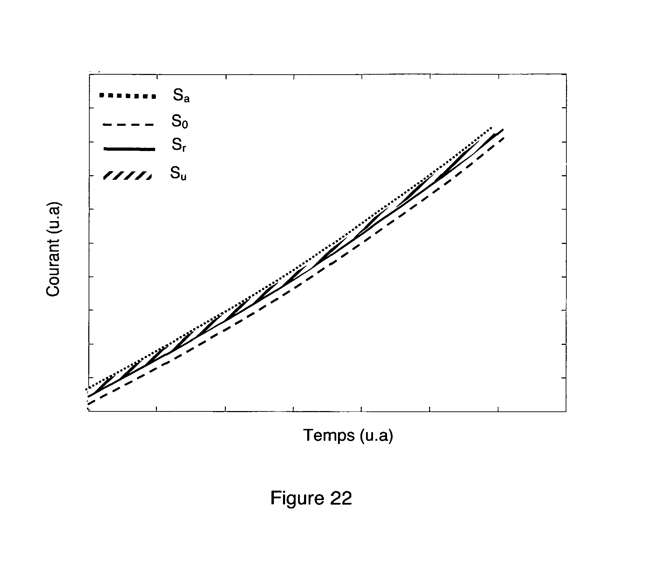

Comme représenté à la figure 22, l'évolution du signal du bolomètre actif 7 et du bolomètre de référence 10, respectivement $S_a$ et $S_r$, pendant la phase de polarisation, montre que le signal du bolomètre de référence 10 suit celui du bolomètre actif 7. En comparaison avec le signal $S_0$ d'un bolomètre de référence ayant uniquement un écran métallique selon l'art antérieur, on observe la présence d'un résiduel de courant d'offset qui avoisine les 1%. Le signal intégré sera alors composé d'une partie non utile ne comportant pas d'informations sur la scène.

Pour des courants de polarisation et des gains typiques de dispositifs conventionnels d'imagerie IR, ce résiduel peut atteindre jusqu'à 30% de la dynamique de sortie des dispositifs. L'excursion disponible du signal pour imager la scène est, par conséquent, réduite. Les caractéristiques distinctives du dispositif de détection d'un rayonnement électromagnétique de l'invention permettent de supprimer ou, tout au moins, fortement réduire ce résiduel. Ainsi, le dispositif de détection d'un rayonnement électromagnétique selon l'invention optimise l'ébasage du courant d'offset et permet d'augmenter la dynamique de scène disponible.

## Revendications

1.  Dispositif de détection d'un rayonnement électromagnétique qui comporte sur un même substrat (14) :

    - un bolomètre actif (7) muni d'un premier élément sensible (12) audit rayonnement électromagnétique (8),
    - un bolomètre de référence (10) identique au bolomètre actif (7), muni d'un second élément sensible (13) audit rayonnement électromagnétique (8),
    - un capot (15) ayant une paroi externe (16) et une paroi interne (17) orientée vers le second élément sensible (13), ledit capot (15) recouvrant au moins la partie du second élément sensible (13) exposée au rayonnement électromagnétique (8) et aménageant un espace vide séparant le second élément sensible (13) et la paroi interne (17) et,
    - un écran réfléchissant (18) formant au moins une partie exposée audit rayonnement électromagnétique (8) de la paroi externe (16),

    dispositif **caractérisé en ce que** la paroi interne (17) du capot (15) est constituée par une couche absorbante (20), ladite couche (20) étant en un matériau absorbant au moins les radiations thermiques émises par le second élément sensible (13).

2.  Dispositif selon la revendication 1, **caractérisé en ce que** le capot (15) encapsule entièrement le second élément sensible (13).

**3.** Dispositif selon l'une des revendications 1 et 2, **caractérisé en ce que** le capot (15) prend appui sur le substrat (14).

**4.** Dispositif selon la revendication 3, **caractérisé en ce que** le capot (15) forme avec le substrat (14) une cavité (19) fermée dans laquelle le bolomètre de référence (10) est logé.

**5.** Dispositif selon l'une des revendications 1 et 2, **caractérisé en ce que** le bolomètre de référence (10) a une structure isolante à microponts comportant des points d'ancrage (6) et **en ce que** le capot (15) prend appui sur au moins deux desdits points d'ancrage (6).

**6.** Dispositif selon l'une quelconque des revendications 1 à 5, **caractérisé en ce que** la couche absorbante (20) est une multicouche.

**7.** Dispositif selon l'une quelconque des revendications 1 à 6, **caractérisé en ce que** la couche absorbante (20) est formée par au moins un matériau absorbant métallique poreux choisi parmi l'or noir, le platine, l'argent et le chrome.

**8.** Dispositif selon l'une quelconque des revendications 1 à 6, **caractérisé en ce que** la couche absorbante (20) est formée par au moins un matériau polymère contenant du graphite.

**9.** Dispositif l'une quelconque des revendications 1 à 6, **caractérisé en ce que** la couche absorbante (20) est formée par au moins un matériau absorbant résistif choisi parmi le nitrure de titane et le nichrome.

**10.** Dispositif selon l'une quelconque des revendications 1 à 9, **caractérisé en ce que** le capot (15) comporte une couche support (30) disposée entre la couche absorbante (20) et l'écran réfléchissant (18) et **en ce que** le bolomètre actif (7) est encapsulé par une capsule (29), ladite couche support (30) étant constituée par un matériau transparent au rayonnement électromagnétique émis par le bolomètre de référence (10).

**11.** Dispositif selon la revendication 10, **caractérisé en ce que** le matériau transparent de la couche support (30) est choisi parmi le silicium monocristallin, polycristallin ou amorphe, le germanium monocristallin ou polycristallin et les alliages SiGe.

Figure 1 (Art antérieur)

Figure 2 (Art antérieur)

Figure 3 (Art antérieur)

Figure 4

$S_2$

$S_1$

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

Europäisches
Patentamt

European
Patent Office

Office européen
des brevets

**RAPPORT DE RECHERCHE EUROPEENNE**

Numéro de la demande

EP 11 35 4055

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 2007/138395 A1 (LANE WILLIAM A [IE] ET AL) 21 juin 2007 (2007-06-21) <br> * abrégé; figures 8, 9 * <br> * alinéas [0044] - [0048], [0050], [0054] * <br> ----- | 1-11 | INV. <br> G01J5/04 <br> G01J5/06 <br> G01J5/20 <br> G01J5/02 |
| A | WO 2006/120362 A1 (COMMISSARIAT ENERGIE ATOMIQUE [FR]; OUVRIER-BUFFET JEAN-LOUIS [FR]; BI) 16 novembre 2006 (2006-11-16) <br> * abrégé; figures 4,5,7-9 * <br> * page 9, ligne 15-22 * <br> * page 12, ligne 30 - page 13, ligne 3 * <br> ----- | 1-11 | |
| A | US 2001/035559 A1 (ANDO HIROSHI [JP] ET AL) 1 novembre 2001 (2001-11-01) <br> * abrégé; figure 6 * <br> * alinéas [0040] - [0048] * <br> ----- | 1-11 | |

DOMAINES TECHNIQUES
RECHERCHES (IPC)

G01J

Le présent rapport a été établi pour toutes les revendications

| Lieu de la recherche | Date d'achèvement de la recherche | Examinateur |
|---|---|---|
| Munich | 28 novembre 2011 | Varelas, Dimitrios |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 11 35 4055

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-11-2011

| Document brevet cité au rapport de recherche | | Date de publication | Membre(s) de la famille de brevet(s) | | Date de publication |
|---|---|---|---|---|---|
| US 2007138395 | A1 | 21-06-2007 | CN<br>EP<br>WO<br>JP | 101563591 A<br>2076744 A1<br>2008046861 A1<br>2010507083 A | 21-10-2009<br>08-07-2009<br>24-04-2008<br>04-03-2010 |
| WO 2006120362 | A1 | 16-11-2006 | AT<br>EP<br>US | 458186 T<br>1880176 A1<br>2008265164 A1 | 15-03-2010<br>23-01-2008<br>30-10-2008 |
| US 2001035559 | A1 | 01-11-2001 | JP | 2001304973 A | 31-10-2001 |

EPO FORM P0460

Pour tout renseignement concernant cette annexe : voir Journal Officiel de l'Office européen des brevets, No.12/82

**EP 2 447 688 A1**

## RÉFÉRENCES CITÉES DANS LA DESCRIPTION

### Documents brevets cités dans la description

- US 2007138395 A